# EUROPEAN PATENT APPLICATION

(11) **EP 4 545 414 A2**
(43) Date of publication of application: **30.04.2025**
(21) Application number: 25160834.5
(22) Date of filing: 10.01.2024
(51) Int. Cl.: B64D 27/31

(54) **FLIGHT VEHICLE, MOTOR CONTROL APPARATUS, METHOD, AND PROGRAM**

(30) Priority: 13.01.2023 JP 2023003964
(62) Divisional of application: 24151098.1
(71) Applicant: Nabtesco Corporation, Tokyo 102-0093 (JP)
(72) Inventor: OGAWA, Takashi, Chiyoda-ku Tokyo (JP); MORI, Atsushi, Chiyoda-ku Tokyo (JP)
(74) Representative: Dennemeyer & Associates S.A.

(57) **Abstract**

A flight vehicle (1) of the present invention includes: a main body (10); a plurality of rotary blades (30) that include a first rotary blade provided on one side of the main body (10) in a width direction and a second rotary blade provided on the other side of the main body (10) in the width direction; an acquisition unit (101) that acquires rotational positions of the rotary blades (30); and a control unit (103) that controls the rotational positions based on the rotational positions acquired so that the rotational positions of the first rotary blade and the second rotary blade associated with each other are in a predetermined positional relationship.

## Description

### [TECHNICAL FIELD]

The present invention relates to a flight vehicle, a motor control apparatus, a method, and a a program.

### [BACKGROUND ART]

In recent years, electric vertical take-off and landing aircraft (eVTOL aircraft) have been widely used. For example, Patent literature 1 discloses a flight vehicle that can fly as an eVTOL aircraft as the rotational speed of each of a plurality of rotor blades is controlled.

### RELATED-ART LITERATURE

### [Patent Literature]

[Patent literature 1] US11155356

### [SUMMARY OF INVENTION]

### [TECHNICAL PROBLEM]

In a flight vehicle having a plurality of rotor blades, appearance carries weight. When the rotation of a plurality of rotor blades of a conventional flying vehicle stops such as when the aircraft is parked, for example, the stop positions of the blades may be uneven. Therefore, there has been room for improvement in the appearance of flight vehicles.

The present invention addresses the issue described above, and a purpose thereof is to provide a technology for flight vehicles for improving appearance.

### [SOLUTION TO PROBLEM]

A flight vehicle according to an embodiment of the present invention includes: a main body; a plurality of rotary blades that include a first rotary blade provided on one side of the main body in a width direction and a second rotary blade provided on the other side of the main body in the width direction; an acquisition unit that acquires rotational positions of the rotary blades; and a control unit that controls the rotational positions based on the rotational positions acquired so that the rotational positions of the first rotary blade and the second rotary blade associated with each other are in a predetermined positional relationship.

A method of controlling a flight vehicle according to another embodiment of the present invention is a method of controlling a flight vehicle including: a main body; and a plurality of rotary blades that include a first rotary blade provided on one side of the main body in a width direction and a second rotary blade provided on the other side of the main body in the width direction, the method including: acquiring rotational positions of the rotary blades; and controlling the rotational positions based on the rotational positions acquired so that the rotational positions of the first rotary blade and the second rotary blade associated with each other are in a predetermined positional relationship.

A program for controlling a flight vehicle according to another embodiment of the present invention stores a program for controlling a flight vehicle including: a main body; and a plurality of rotary blades that include a first rotary blade provided on one side of the main body in a width direction and a second rotary blade provided on the other side of the main body in the width direction, the program causing a computer to execute: acquiring rotational positions of the rotary blades; and controlling the rotational positions based on the rotational positions acquired so that the rotational positions of the first rotary blade and the second rotary blade associated with each other are in a predetermined positional relationship.

A motor control apparatus according to another embodiment of the present invention is a motor control apparatus provided in each of a plurality of rotary blades of a flight vehicle, the flight vehicle including: a main body; the plurality of rotary blades that include a first rotary blade provided on one side of the main body in a width direction and a second rotary blade provided on the other side of the main body in the width direction; and a higher-level control apparatus that controls the plurality of rotary blades, the motor control apparatus including: a lower-level control unit that controls the rotary blades based on a command transmitted from the higher-level control apparatus; and a lower-level determination unit that determines whether there is an abnormality in communication between the higher-level control apparatus and the motor control apparatus, wherein the lower-level control unit sets, when there is an abnormality in communication, the rotational position of the first rotary blade provided with the motor control apparatus having an abnormality in communication and the rotational position of the second rotary blade associated with the first rotary blade in a predetermined positional relationship regardless of the command from the higher-level control apparatus.

A method used in a motor control apparatus according to another embodiment of the present invention is a method used in a motor control apparatus provided in each of a plurality of rotary blades of a flight vehicle, the flight vehicle including: a main body; the plurality of rotary blades that include a first rotary blade provided on one side of the main body in a width direction and a second rotary blade provided on the other side of the main body in the width direction; and a higher-level control apparatus that controls the plurality of rotary blades, the method including: controlling the rotary blades based on a command transmitted from the higher-level control apparatus; determining whether there is an abnormality in communication between the higher-level control apparatus and the motor control apparatus; and when there is an abnormality in communication, setting the rotational position of the first rotary blade provided with the motor control apparatus having an abnormality in communication and the rotational position of the second rotary blade associated with the first rotary blade in a predetermined positional relationship regardless of the command from the higher-level control apparatus.

A program used in a motor control apparatus according to another embodiment of the present invention is a recording medium that stores a program used in a motor control apparatus provided in each of a plurality of rotary blades of a flight vehicle, the flight vehicle including: a main body; the plurality of rotary blades that include a first rotary blade provided on one side of the main body in a width direction and a second rotary blade provided on the other side of the main body in the width direction; and a higher-level control apparatus that controls the plurality of rotary blades, the program causing a computer to execute: controlling the rotary blades based on a command transmitted from the higher-level control apparatus; determining whether there is an abnormality in communication between the higher-level control apparatus and the motor control apparatus; and setting, when there is an abnormality in communication, the rotational position of the first rotary blade provided with the motor control apparatus having an abnormality in communication and the rotational position of the second rotary blade associated with the first rotary blade in a predetermined positional relationship regardless of the command from the higher-level control apparatus.

### [ADVANTAGEOUS EFFECTS OF INVENTION]

According to the present invention, it is possible to provide a technology for flight vehicles for improving appearance.

### [BRIEF DESCRIPTION OF DRAWINGS]

FIG. 1 is a top view schematically showing the electric vertical take-off and landing aircraft of the first embodiment;
FIG. 2 is a functional block diagram of the higher-level control apparatus of the first embodiment;
FIG. 3 is a diagram illustrating the internal configuration of the motor control apparatus of the first embodiment;
FIG. 4 is a flowchart illustrating a process of the higher-level control apparatus of the first embodiment;
FIG. 5 illustrates the rotational positions of the first rotary blade and the second rotary blade of the first embodiment;
FIG. 6 shows a reference example of the rotational positions of the first rotary blade and the second rotary blade;
FIG. 7 shows another example of the rotational positions of the first rotary blade and the second rotary blade;
FIG. 8 shows another reference example of the rotational positions of the first rotary blade and the second rotary blade;
FIG. 9 shows a variation related to setting of the threshold value;
FIG. 10 shows a variation related to setting of the threshold value;
FIG. 11 is a functional block diagram of the motor control apparatus of the second embodiment;
FIG. 12 is a diagram illustrating the internal configuration of the motor control apparatus of the second embodiment;
FIG. 13 is a truth table of the first-third switches;
FIG. 14 is a flowchart illustrating a process of the higher-level control apparatus of the second embodiment;
FIG. 15 illustrates the rotational speed of the rotary blade in the event of a failure; and
FIG. 16 is a flowchart illustrating a process of the motor control apparatus of the second embodiment.

### [DESCRIPTION OF EMBODIMENTS]

Of the embodiments disclosed in this specification, those composed of a plurality of objects may be such that the plurality of objects may be integrated, or, conversely, an object may be divided into a plurality of objects. Regardless of whether objects are integrated or not, they may be configured so as to achieve the purpose of the invention.

Of the embodiments disclosed in this specification, those in which a plurality of functions are provided in a distributed manner may be such that some or all of the plurality of functions may be aggregated, or, conversely, those in which a plurality of functions are aggregated may be such that some or all of the plurality of functions are distributed. Regardless of whether functions are aggregated or distributed, they may be configured so as to achieve the purpose of the invention.

Further, separate constituting elements that have something in common are distinguished by adding "first, second" or the like at the beginning of the name. These numerals are omitted when the constituting elements are referred to collectively. Although terms including ordinal numbers such as first and second are used to describe various constituting elements, these terms are used only for the purpose of distinguishing one constituting element from other constituting elements, and the constituting elements shall not be limited by these terms.

### First embodiment

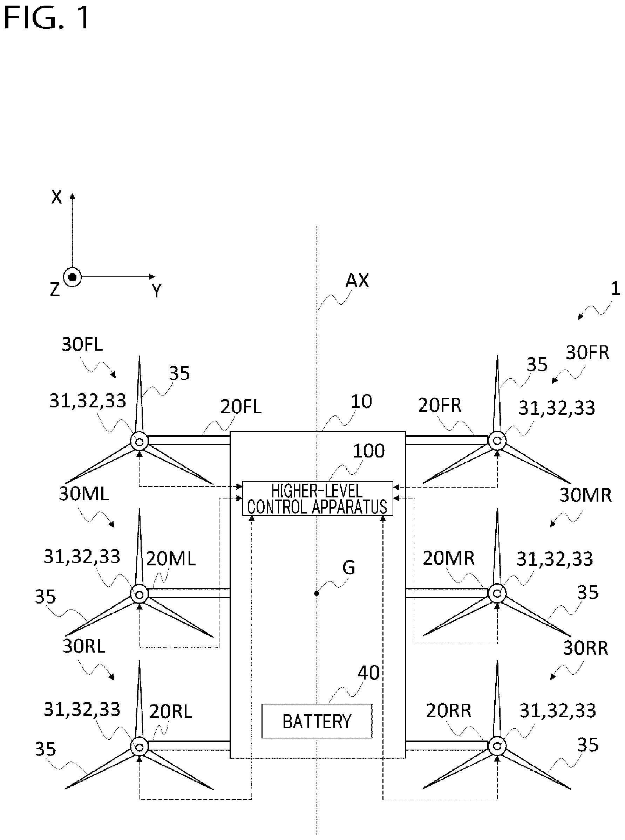

FIG. 1 is a top view schematically showing the electric vertical take-off and landing aircraft (hereinafter referred to as eVTOL) 1 of this embodiment. The eVTOL 1 of this embodiment is configured as an unmanned aerial vehicle capable of takeoff and landing in the vertical direction. The eVTOL 1 includes a main body 10 constituting the fuselage of the eVTOL 1, six arms 20FR, 20FL, 20MR, 20ML, 20RR, and 20RL, and six rotary blades 30FR, 30FL, 30MR, 30ML, 30RR, and 30RL. The eVTOL 1 of this embodiment is an example of a flight vehicle. In this embodiment, the X direction in FIG. 1 is described as the longitudinal direction, the Y direction as the horizontal direction or the width direction, and the Z direction as the vertical direction.

The arm 20FR is disposed at the right front of the main body 10, the arm 20FL is disposed at left front of the main body 10, the arm 20MR is disposed at the right center of the main body 10, the arm 20ML is disposed at the left center of the main body 10, the arm 20RR is disposed at the right rear of the main body 10, and the arm 20RL is disposed at the left rear of the main body 10. Hereinafter, when it is not particularly necessary to distinguish between the arms 20FR, 20FL, 20MR, 20ML, 20RR, and 20RL, they may be collectively referred to as the arms 20. Each arm 20 supports a rotary blade 30 provided therein.

The six rotary blades 30FR, 30FL, 30MR, 30ML, 30RR, and 30RL are disposed at the ends of the arms 20FR, 20FL, 20MR, 20ML, 20RR, and 20RL, respectively. Hereinafter, when it is not particularly necessary to distinguish between the rotary blades 30FR, 30FL, 30MR, 30ML, 30RR, and 30RL, they may be collectively referred to as the rotary blades 30. Each rotary blade 30 has three blades 35 arranged at equiangular intervals from each other. The axis of rotation of the rotary blade 30 is arranged so as to be parallel to the Z direction. The rotary blade 30 is configured to be usable as a lift rotary blade for obtaining a lift force of the eVTOL 1 and as a cruise rotary blade for obtaining a thrust, by rotating around the rotation axis. Specifically, the rotational speeds of the rotary blades 30 are controlled to be equal so that the six rotary blades 30 are used as lift rotary blades. Further, the rotational speed of the two rotary blades 30 on the front side, the rotational speed of the two rotary blades 30 at the center, and the rotational speed of the two rotary blades 30 on the rear side are controlled to be different from each other so that the six rotary blades 30 are used as cruise rotary blades. Each rotary blade 30 is rotated and driven independently of each other.

Each rotary blade 30 includes an electric motor 31, a motor control apparatus 32, and a rotation detection sensor 33. The electric motor 31 receives power supply from a battery 40 and is driven into rotation. The electric motor 31 is, for example, a 3-phase brushless motor. The motor control apparatus 32 controls the driving of the electric motor 31 based on a speed command or a position command described later from a higher-level control apparatus 100 described later. The rotation detection sensor 33 detects the rotational position and the rotational speed of the rotary blade 30. The rotation detection sensor 33 of this embodiment detects the rotational position and the rotational speed of the rotor (not shown) of the electric motor 31 as the rotational position and the rotational speed of the rotary blade 30, but the embodiment is not limited thereto. For example, the rotation detection sensor 33 may detect the rotational position and the rotational speed of the blade 35 of the rotary blade 30. The detection result of the rotation detection sensor 33 is output to the higher-level control apparatus 100 and the motor control apparatus 32.

In this embodiment, the rotary blades provided on one side of the main body 10 in the width direction (for example, the rotary blades 30FR, 30MR, and 30RR) are examples of the first rotary blade 30R, and the rotary blades provided on the other side of the main body 10 in the width direction (for example, the rotary blades 30FL, 30ML, and 30RL) are examples of the second rotary blade 30L.

In this embodiment, the rotary blades 30FR and 30FL, the rotary blades 30MR and 30ML, and the rotary blades 30RR and 30RL are arranged symmetrically with respect to a vertical plane including a main body axis AX. The "main body axis AX" is an axis passing through the position of the center of gravity G of the main body 10 and aligned with the longitudinal direction (X direction).

The main body 10 accommodates the battery 40 and the higher-level control apparatus 100. The battery 40 supplies power to the higher-level control apparatus 100, the electric motor 31 provided in each rotary blade 30, the motor control apparatus 32, the rotation detection sensor 33, and the like. The battery 40 is a secondary battery such as a lithium ion battery that can be repeatedly charged and discharged.

The higher-level control apparatus 100 executes various processes in the eVTOL 1. The higher-level control apparatus 100 is configured such that it can communicate with the motor control apparatus 32 provided in each rotary blade 30.

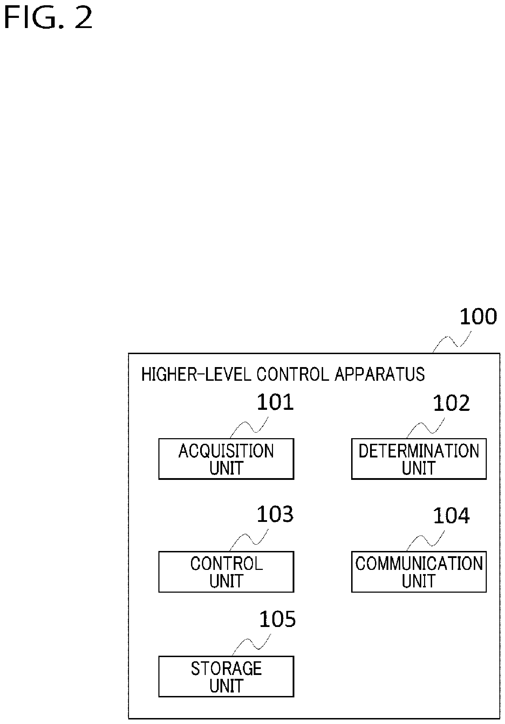

FIG. 2 is a functional block diagram of the higher-level control apparatus 100. The functional blocks depicted in FIG. 2 and figures that follow are implemented in hardware by devices/electronic circuits and mechanical apparatuses exemplified by a processor, a CPU, and a memory of a computer, and in software by a computer program, etc. The figures depict functional blocks implemented by the cooperation of these elements. Therefore, it will be understood by those skilled in the art that the functional blocks may be implemented in a variety of manners by a combination of hardware and software. The higher-level control apparatus 100 includes an acquisition unit 101, a determination unit 102, a control unit 103, a communication unit 104, and a storage unit 105.

The acquisition unit 101 acquires the rotational position and the rotational speed of each rotary blade 30 from the rotation detection sensor 33 provided in each rotary blade 30.

The determination unit 102 executes various determination processes in the higher-level control apparatus 100. The determination unit 102 of this embodiment determines whether the rotational speed acquired from the rotation detection sensor 33 is equal to or greater than a threshold value.

The control unit 103 outputs, to the motor control apparatus 32, a speed command or a position command for controlling the electric motor 31 to control the rotation of the rotary blade 30. The speed command of this embodiment includes a command value for rotational speed of the rotary blade 30 (hereinafter referred to as a speed command value) and a speed control command for causing the motor control apparatus 32 to execute speed control. The position command of this embodiment includes a command value for the rotational position of the rotary blade 30 (hereinafter, referred to as a position command value) and a position control command for causing the motor control apparatus 32 to execute position control. For example, the control unit 103 generates a speed command value in the speed command or a position command value in the position command in response to a user input via a user controller (not shown) that allows the user to manipulate the eVTOL 1.

The control unit 103 of this embodiment controls the rotational position based on the acquired rotational position so that the rotational positions of the first rotary blade 30R and the second rotary blade 30L associated with each other are in a predetermined positional relationship.

The communication unit 104 communicates with the motor control apparatus 32 and the rotation detection sensor 33. The scheme for communication between the communication unit 104, the motor control apparatus 32, and the rotation detection sensor 33 is not limited to any particular scheme, and a known communication scheme is used. Further, the communication unit 104 can communicate wirelessly with the user controller (not shown) that allows the user to manipulate the eVTOL 1.

The storage unit 105 can store information acquired by the acquisition unit 101, intermediate processed information derived from processing the acquired information, and the like in a time series. The storage unit 105 stores a program for executing the process of the higher-level control apparatus 100 of this embodiment. The storage unit 105 of this embodiment stores a pair of the first rotary blade 30R and the second rotary blade 30L associated with each other. In this embodiment, for example, the rotary blades 30FR, 30MR, and 30RR as the first rotary blade 30R are associated with each other in a set, and the rotary blades 30FL, 30ML, and 30RL as the second rotary blade 30L are associated with each other in a set.

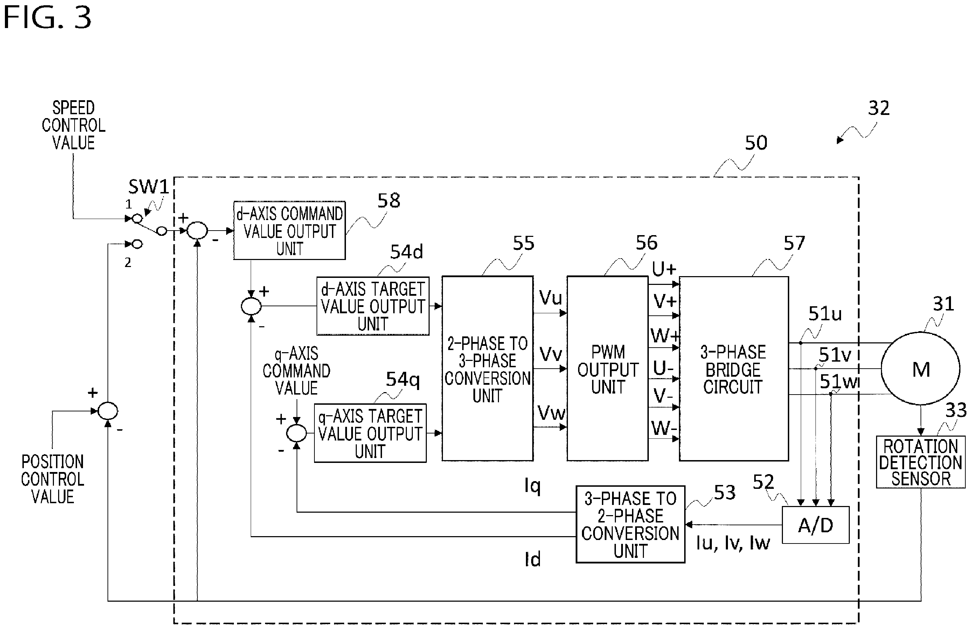

FIG. 3 is a diagram illustrating the internal configuration of the motor control apparatus 32 of the first embodiment. The motor control apparatus 32 receives a speed command or a position command from the control unit 103 and controls the rotation of the rotary blade 30 by controlling the rotation of the electric motor 31 based on the received commands. The motor control apparatus 32 includes a vector control unit 50 connected to the electric motor 31 and the rotation detection sensor 33. A publicly known configuration may be used in the vector control unit 50. For example, the vector control unit 50 includes a U-phase current detection unit 51u, a V-phase current detection unit 51v, a W-phase current detection unit 51w, an A/D conversion unit 52, a 3-phase to 2-phase conversion unit 53, a d-axis target value output unit 54d, a q-axis target value output unit 54q, a 2-phase to 3-phase conversion unit 55, a PWM output unit 56, and a 3-phase bridge circuit 57.

The U-phase current detection unit 51u, the V-phase current detection unit 51v, and the W-phase current detection unit 51w are connected to the U, V, and W-phase arms of the 3-phase bridge circuit 57 and output a potential difference signal corresponding to the potential difference across the ends of each shunt resistor to the A/D conversion unit 52.

The A/D conversion unit 52 outputs phase currents Iu, Iv, and Iw of the respective phases by subjecting the potential difference signals output from the U-phase, V-phase, and W-phase current detection units 51u, 51v, and 51w to A/D conversion, respectively.

The 3-phase to 2-phase conversion unit 53 converts the phase current detection values Iu, Iv, and Iw into a d-axis current detection value Id and a q-axis current detection value Iq in the dq rotation coordinate system.

The d-axis target value output unit 54d sets a d-axis current target value based on the d-axis command value output value output from the d-axis command value output unit 58, the rotational speed output from the rotation detection sensor 33, and the d-axis current detection value Id output from the 3-phase to 2-phase conversion unit 53. Further, the d-axis target value output unit 54D calculates a d-axis voltage target value at predetermined periods based on the d-axis current target value. For example, the d-axis target value output unit 54d executes current feedback control such as proportional integration control (PI control) on the current deviation between the d-axis current detection value Id and the d-axis current target value. As a result, the d-axis voltage target value is calculated and output to cause the d-axis current detection value Id to approach the d-axis current target value. The q-axis target value output unit 54q similarly sets a q-axis current target value based on the q-axis command value and the q-axis current detection value Iq output from the 3-phase to 2-phase conversion unit 53 and calculates and outputs a q-axis voltage target value. The q-axis command value of this embodiment is 0.

The 2-phase to 3-phase conversion unit 55 converts the d, q-axis voltage target values into 3-phase voltage target values comprised of a U-phase voltage command value Vu, a V-phase voltage command value Vv, and a W-phase voltage command value Vw.

The PWM output unit 56 generates and outputs a PWM signal for driving each switching element (not shown) of the 3-phase bridge circuit 57 based on the 3-phase voltage command values Vu, Vv, and Vw, and a carrier wave (carrier) exemplified by a triangular wave carrier.

The 3-phase bridge circuit 57 includes a U-phase arm, a V-phase arm, and a W-phase arm in each of which two switching elements (not shown) are connected in series. A coil of the corresponding phase in the electric motor 31 is connected between the two switching elements of the U, V, and W phase arms of the 3-phase bridge circuit 57. The switching element used in the 3-phase bridge circuit 57 of this embodiment is an IGBT but is not limited thereto. The switching element may be, for example, a FET.

The motor control apparatus 32 of this embodiment further includes a first switch SW1 connected to the vector control unit 50. A speed command value from the higher-level control apparatus 100 is input to the first terminal of the first switch SW1, and a position command value from the higher-level control apparatus 100 is input to the second terminal of the first switch SW1. The first switch SW1 of this embodiment is configured to switch the input to the vector control unit 50 to either a speed command value or a position command value. The first switch SW1 is thrown to the side of the first terminal based on the speed control command included in the speed command and is thrown to the side of the second terminal side based on the position control command included in the position command. That is, the first switch SW1 is thrown to the side of the first terminal when the rotational speed detected by the rotation detection sensor 33 is equal to or greater than the threshold value and is thrown to the side of the second terminal when the rotational speed is less than the threshold value.

When the first switch SW1 is thrown to the side of the first terminal, the difference between the speed command value from the higher-level control apparatus 100 and the rotational speed detected by the rotation detection sensor 33 is input to the d-axis command value output unit 58. The d-axis command value output unit 58 generates a d-axis command value based on the input difference and outputs the d-axis command value to the d-axis target value output unit 54d. When the first switch SW1 is thrown to the side of the first terminal, therefore, the electric motor 31 is controlled to follow the speed command value from the higher-level control apparatus 100.

When the first switch SW1 is thrown to the side of the second terminal, the difference between the position command value from the higher-level control apparatus 100 and the rotational position detected by the rotation detection sensor 33 is input to the d-axis command value output unit 58. The d-axis command value output unit 58 generates a d-axis command value based on the input difference and outputs the d-axis command value to the d-axis target value output unit 54D. When the first switch SW1 is thrown to the side of the second terminal, therefore, the electric motor 31 is controlled to follow the position command value from the higher-level control apparatus 100.

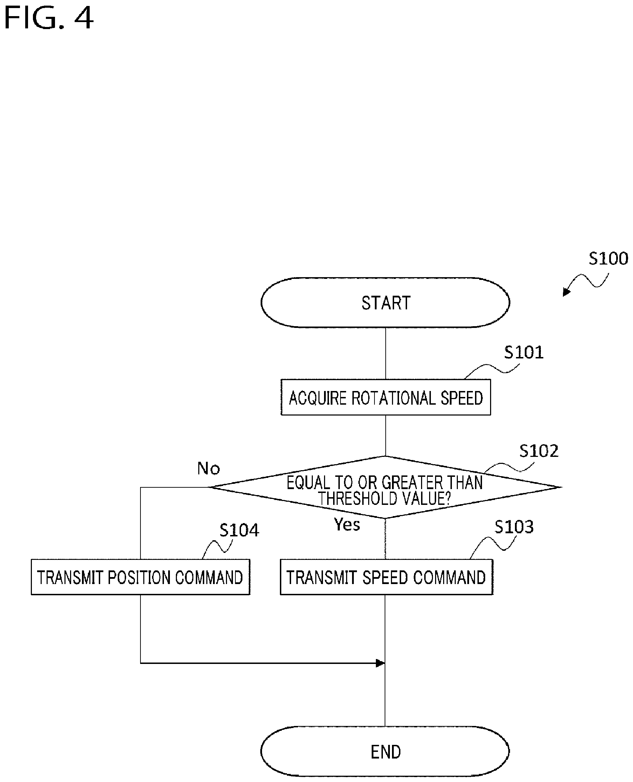

FIG. 4 is a flowchart illustrating a process S100 of the higher-level control apparatus 100 of the first embodiment. This process S100 is a process started at power-on of the eVTOL 1 and is repeatedly executed at predetermined time intervals (for example, every several milliseconds).

In step S101, the acquisition unit 101 acquires the rotational speed of the rotary blade 30. For example, the acquisition unit 101 can acquire the rotational speed from the rotation detection sensor 33.

In step S102, the determination unit 102 determines whether the acquired rotational speed is equal to or greater than the threshold value. When the rotational speed is equal to or greater than the threshold value (Y in step S102), the process S100 proceeds to step S103. When the rotational speed is not equal to or greater than the threshold value (N in step S102), the process S100 proceeds to step S104.

In step S103, the control unit 103 generates a speed command and transmits the speed command to the motor control apparatus 32 via the communication unit 104. According to the speed control command in the speed command, the first switch SW1 is thrown to the side of the first terminal, and the electric motor 31 is controlled based on the speed command value. After step S103, the process S100 is terminated.

In step S104, the control unit 103 generates a position command and transmits the position command to the motor control apparatus 32 via the communication unit 104. The first switch SW1 is thrown to the side of the second terminal according to the position control command in the position command, and the electric motor 31 is controlled based on the position command value. In particular, the control unit 103 controls the rotational position so that, based on the rotational positions of the first rotary blade 30R and the second rotary blade 30L associated with each other, the rotational positions are in a predetermined positional relationship. According to this embodiment, the rotational position is controlled when, for example, the rotational speed of the rotary blade 30 during takeoff or during landing is small (that is, when the rotational speed is less than the threshold value).

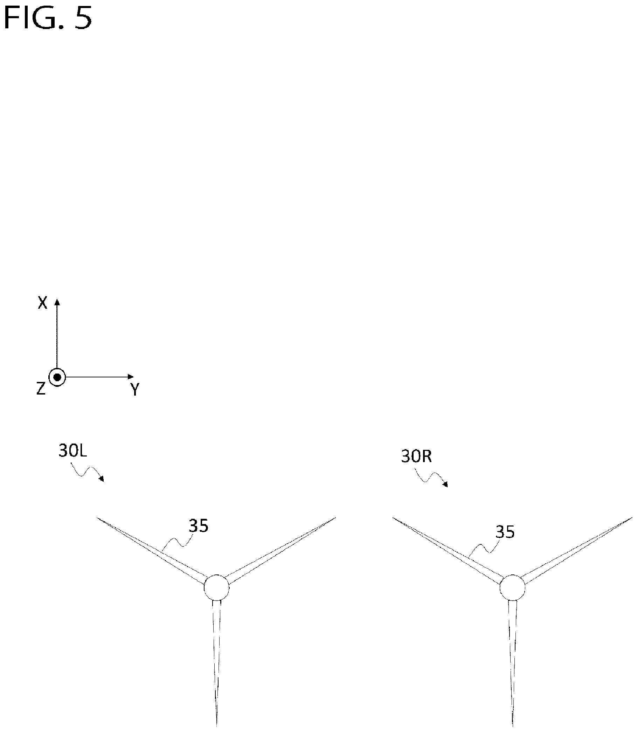

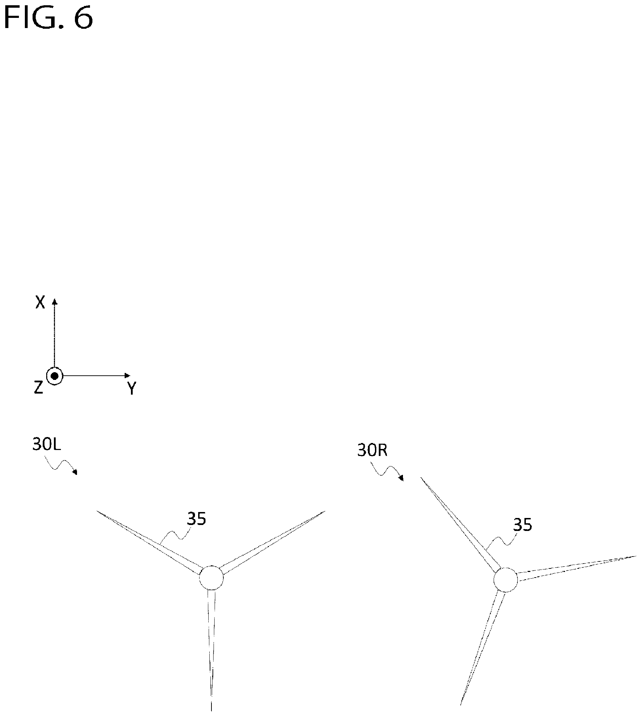

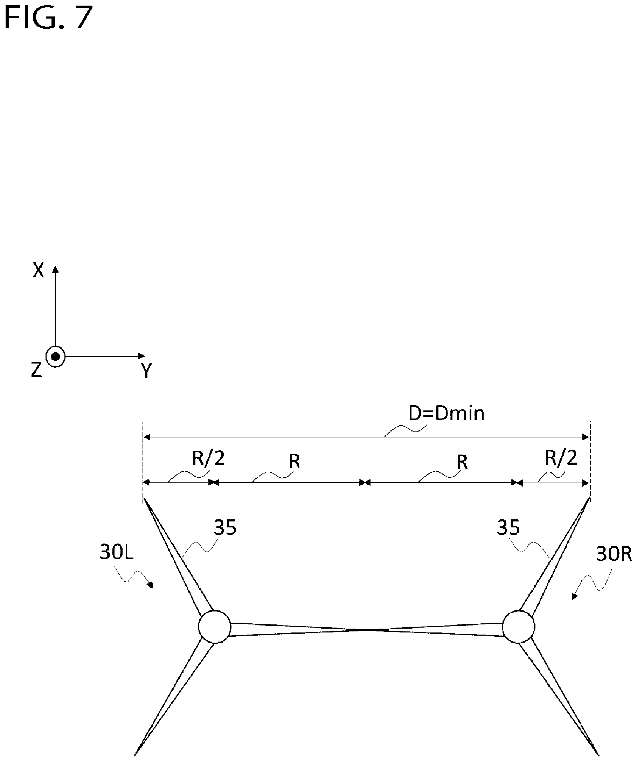

FIG. 5 illustrates the rotational positions of the first rotary blade 30R and the second rotary blade 30L of this embodiment. In the example of FIG. 5, the rotational positions of one first rotary blade 30R and one second rotary blade 30L are respectively shown for simplicity. The same applies to FIGS. 6 and 7 below. The predetermined positional relationship of the rotational positions of the first rotary blade 30R and the second rotary blade 30L of this embodiment is such that the blades are in the same rotational position in a top view. Therefore, the control unit 103 of this embodiment controls each rotational position so that the rotational positions of the first rotary blade 30R and the second rotary blade 30L are the same rotational position in a top view. For example, the control unit 103 of this embodiment executes control to set the first rotary blade 30R and the second rotary blade 30L to the same rotation angle. For example, the control unit 103 of this embodiment sets the first rotary blade 30R and the second rotary blade 30L to the same rotational position and then rotates the first rotary blade 30R and the second rotary blade 30L by a rotation angle determined by a user input and at a predetermined rotational speed. As a result, the rotation of the first rotary blade 30R and the second rotary blade 30L is synchronized. When the aircraft is parked, the first rotary blade 30R and the second rotary blade 30L are stopped at symmetrical positions.

After step S104, the process S100 is terminated.

Exemplary rotational positions of the first rotary blade 30R and the second rotary blade 30L expected when the position control of this embodiment is not executed (that is, when only normal speed control is executed) are shown in FIG. 6 by way of reference. In the example of FIG. 6, the blades 35 of the first rotary blade 30R and the second rotary blade 30L are arranged irregularly. Therefore, the user feels that the blades 35 of the rotary blades 30 are randomly arranged and so is finds it difficult to have a favorable impression of the appearance.

In this embodiment, on the other hand, the control unit 103 controls the rotational position so that the rotational positions of the first rotary blade 30R and the second rotary blade 30L associated with each other are in a predetermined positional relationship based on the acquired rotational position. According to this configuration, the rotational positions of the first rotary blade 30R and the second rotary blade 30L are placed in a predetermined positional relationship so that the appearance of the eVTOL 1 during parking or flight can be improved.

When speed control is switched to position control in the case the acquired rotational speed is equal to or greater than the threshold value, the rotational speed according to position control cannot catch up with the rotational speed at the time of switching, with the result that the rotary blade 30 may not be able to rotate smoothly, and the appearance may be impaired. In this embodiment, on the other hand, the control unit 103 controls the rotational position when the acquired rotational speed is less than the threshold value. According to this configuration, it is easier, by controlling the rotational position in a state where the rotational speed is low, to rotate the rotary blade 30 smoothly even when switching from speed control to position control is executed. Therefore, the appearance is less impaired.

In this embodiment, the predetermined positional relationship is the same rotational position in a top view (see, for example, FIG. 5). According to this configuration, the blades 35 of the first rotary blade 30R and the second rotary blade 30L are seen aligned so that the appearance of the eVTOL 1 during parking or flight can be effectively improved.

A description will now be given of a variation.

In the embodiment, the eVTOL 1 includes six rotary blades 30. The number of rotary blades 30 is not limited thereto and may be two or more.

In the embodiment, the predetermined positional relationship is the same rotational position in a top view but is not limited thereto. For example, the predetermined positional relationship may be mirror-symmetrical positions about the main body axis AX in a top view. This configuration provides a benefit equivalent to the benefit provided when the predetermined position relationship is the same rotational position. Further, the predetermined positional relationship may be as desired set according to the user's preference.

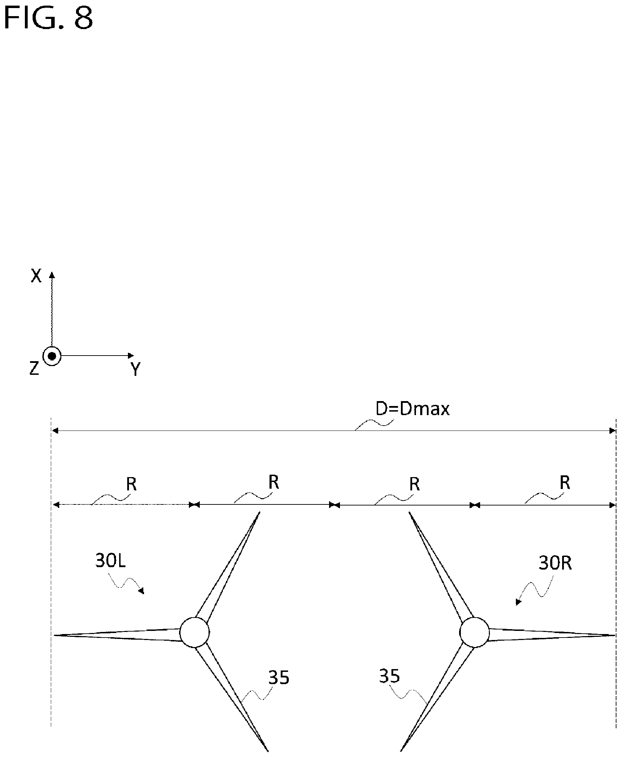

FIG. 7 shows another example of the rotational positions of the first rotary blade 30R and the second rotary blade 30L of this embodiment. As shown in FIG. 7, the predetermined positional relationship may be positions in which the total distance D in the width direction D of the first rotary blade 30R and the second rotary blade 30L associated with each other is the minimum value Dmin. FIG. 8 shows an example, by way of reference, of the rotational positions of the first rotary blade 30R and the second rotary blade 30L occurring when the total distance D in the width direction of the first rotary blade 30R and the second rotary blade 30L associated with each other has the maximum value Dmax. Given that the longitudinal length of the blade 35 is R and the interval between the first rotary blade 30R and the second rotary blade 30L is 2R, the maximum value of the total distance Dmax=4R in the example of FIG. 8. According to the example of FIG. 7, on the other hand, the distance in the Y direction from one end to the other end of the blade 35 provided more outward in the Y direction than the rotation axis of the rotary blade 30 is Rcos 60°=R/2 so that the minimum value of the total distance D is such that Dmin=R+R+R/2+R/2=3R. Thus, in the rotary blade 30 in which three blades 35 are arranged at equiangular intervals, for example, the total distance D during parking can be reduced by up to 25%, which is shown by a comparison between the maximum value Dmax=4R and the minimum value Dmin=3R. According to this configuration, therefore, the space where the eVTOL 1 is parked can be reduced.

When the eVTOL 1 includes a storage unit configured to accommodate the rotary blades 30 when the first rotary blade 30R and the second rotary blade 30L are at predetermined rotational positions for storage, the predetermined positional relationship may be the rotational positions for storage. According to the present configuration, the work load required to re-adjust the rotational positions of the first rotary blade 30R and the second rotary blade 30L to the rotational positions for storage can be reduced, when the rotary blade 30 is stored in the storage unit,

In the embodiment, the rotational position of the rotary blade 30 is controlled both during takeoff and during landing, but the embodiment is not limited thereto. The rotational position of the rotary blade 30 may be controlled during takeoff or during landing.

In the embodiment, the rotary blade 30 is configured to be used both as a lift rotary blade and a cruise rotary blade, but the embodiment is not limited thereto. The lift rotary blade and the cruise rotary blade may be provided separately. In this case, a plurality of lift rotary blades and a plurality of cruise rotary blades may be provided. The lift rotary blades may be associated with each other, and the cruise rotary blades may be associated with each other.

In the embodiment, the rotary blades 30FR and 30FL, the rotary blades 30MR and 30ML, and the rotary blades 30RR and 30RL are symmetrically arranged about a vertical plane including the main body axis AX, but the embodiment is not limited thereto. The blades may be arranged at desired positions.

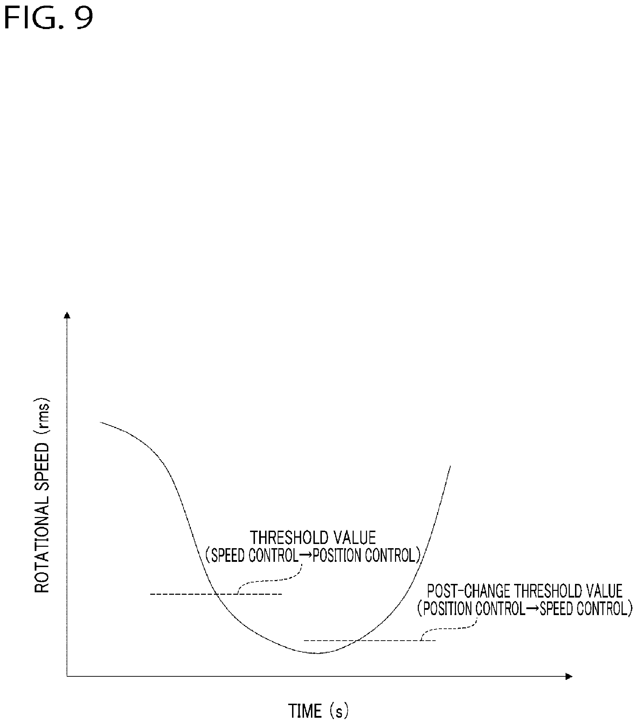

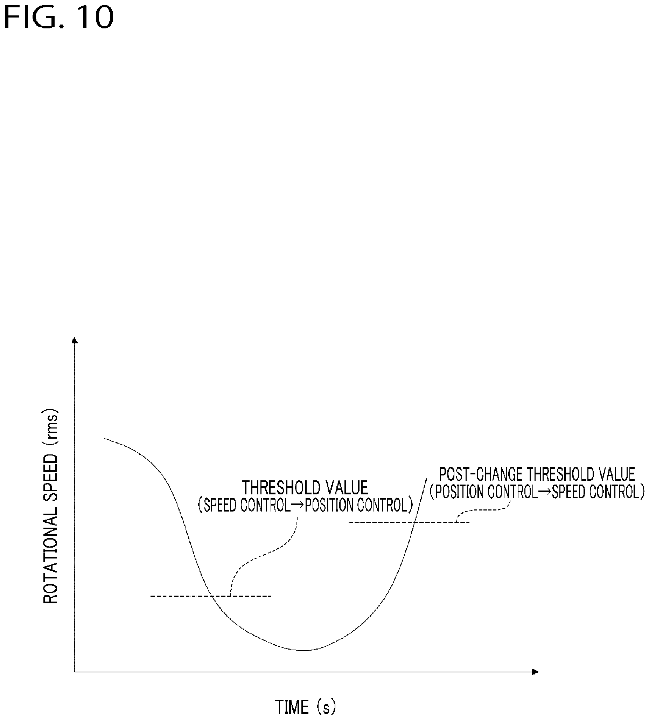

FIGS. 9 and 10 show variations related to setting of the threshold value. The threshold value of the rotational speed may be changed to a lower value to make it possible to switch from position control to speed control of the rotary blade 30 promptly in the event that the eVTOL 1 is lifted again, like when the rotational speed of the rotary blade 30 drops below the threshold value to switch the rotary blade 30 from speed control to position control and then it is subsequently found that the landing position is not the desired position (see, for example, FIG. 9). Further, the threshold value of the rotational speed may be changed to a higher value in order to improve the appearance by synchronizing the rotation of the first rotary blade 30R and synchronizing the rotation of the second rotary blades 30L, (see, for example, FIG. 10). The "event that the eVTOL 1 is lifted again" indicated above means, for example, a case in which, after the rotational speed of the rotary blade 30 drops below the threshold value, the rotational speed detected by the rotation detection sensor 33 increases by a predetermined speed or more or a user input for lifting the eVTOL 1 is received from a user controller (not shown).

### Second embodiment

Hereinafter, a second embodiment of the present invention will be described. In the drawings and description of the second embodiment, components and members identical to or equivalent to those of the first embodiment are denoted by the same numerals. Duplication of the description of the first embodiment will be omitted as appropriate, and the configuration different from the first embodiment will be focused.

In the second embodiment, the rotary blades 30FR and 30FL are associated with each other in the first set, the rotary blades 30MR and 30ML are associated with each other in the second set, and the rotary blades 30RR and 30RL are associated with each other in the first set. The first-third sets are stored in the storage unit 105. Thus, in this embodiment, the first rotary blade 30R and the second rotary blade 30L at symmetrical positions about a vertical plane including the main body axis AX (mirror-symmetrical positions about the main body axis AX in a top view) are defined to form a set.

The determination unit 102 of the second embodiment determines whether the rotary blade 30 has failed.

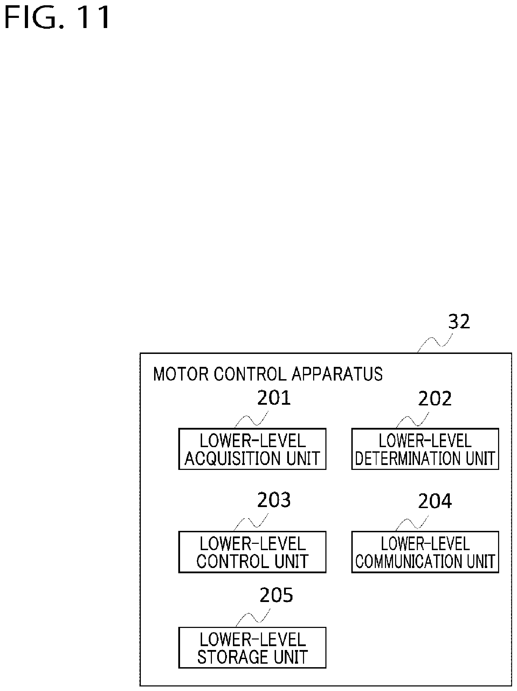

FIG. 11 is a functional block diagram of the motor control apparatus 32 of the second embodiment. The motor control apparatus 32 of the second embodiment includes a lower-level acquisition unit 201, a lower-level determination unit 202, a lower-level control unit 203, a lower-level communication unit 204, and a lower-level storage unit 205. The lower-level acquisition unit 201 acquires the detection result of the rotation detection sensor. The lower-level determination unit 202 determines whether there is an abnormality in communication between the control unit 103 and the motor control apparatus 32. The lower-level communication unit 204 is configured to be able to communicate with the control unit 103 of the higher-level control apparatus 100 and with the lower-level communication unit 204 of the motor control apparatus 32 provided in the rotary blade 30 of the same set. The lower-level storage unit 205 stores programs and various threshold values for executing the process of the motor control apparatus 32.

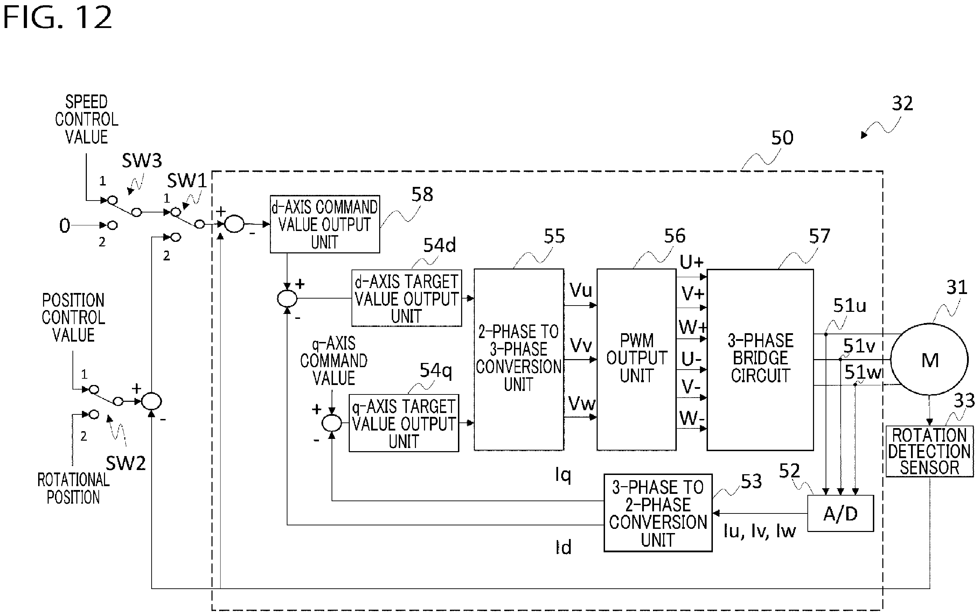

FIG. 12 is a diagram illustrating the internal configuration of the motor control apparatus 32 of the second embodiment. The motor control apparatus 32 of the second embodiment further includes a second switch SW2 connected to the second terminal of the first switch SW1 and a third switch SW3 connected to the first terminal of the first switch SW1. A position command from the higher-level control apparatus 100 is input to the first terminal of the second switch SW2, and the rotational positions of the rotary blades 30 associated to form the set are input to the second terminal of the second switch SW2. A speed command from the higher-level control apparatus 100 is input to the first terminal of the third switch SW3, and the value of 0 is input to the second terminal of the third switch SW3.

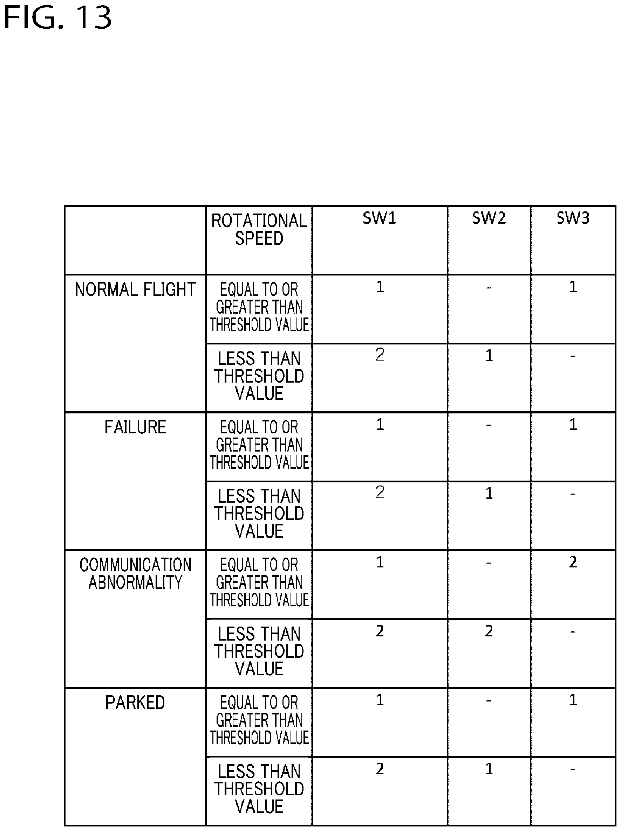

FIG. 13 is a truth table of the first-third switches SW1-SW3. The first-third switches SW1-SW3 of this embodiment is configured to be thrown according to the truth table of FIG. 13.

When the aircraft is in a normal flight condition and the rotational speed is equal to or greater than the threshold value, the first switch SW1 is thrown to the side of the first terminal, and the third switch SW3 is thrown to the side of the first switch. As a result, a speed command is input to the vector control unit 50. When the aircraft is in a normal flight condition and the rotational speed is less than the threshold value, the first switch SW1 is thrown to the side of the second terminal, and the second switch SW2 is thrown to the side of the first switch.
As a result, a position command is input to the vector control unit 50.

When the rotary blade 30 is in a failed state and the rotational speed is equal to or greater than the threshold value, the first switch SW1 is thrown to the side of the first terminal, and the third switch SW3 is thrown to the side of the first switch. As a result, a speed command is input to the vector control unit 50. When the rotary blade 30 is in a failed state and the rotational speed is less than the threshold value, the first switch SW1 is thrown to the side of the second terminal side, and the second switch SW2 is thrown to the side of the first switch. As a result, a position command is input to the vector control unit 50.

When there is an abnormality in communication and the rotational speed is equal to or greater than the threshold value, the first switch SW1 is thrown to the side of the first terminal, and the third switch SW3 is thrown to the side of the second switch. As a result, the value of 0 is input to the vector control unit 50, and the rotation of the rotary blade 30 provided in the motor control apparatus 32 having an abnormality in communication is stopped. When there is an abnormality in communication and the rotational speed is less than the threshold value, the first switch SW1 is thrown to the side of the second terminal, and the second switch SW2 is thrown to the side of the second switch. As a result, the rotational position of the rotary blade 30 associated with the rotary blade 30 provided in the motor control apparatus 32 having an abnormality in communication is input to the vector control unit 50. The rotational position of the rotary blade 30 provided in the motor control apparatus 32 having an abnormality in communication is controlled to be the same as the rotational position of the associated rotary blade 30.

When the eVTOL 1 is parked and the rotational speed is equal to or greater than the threshold value, the first switch SW1 is thrown to the side of the first terminal, and the third switch SW3 is thrown to the side of the first switch. As a result, a speed command is input to the vector control unit 50. When the eVTOL 1 is parked and the rotational speed is less than the threshold value, the first switch SW1 is thrown to the side of the second terminal, and the second switch SW2 is thrown to the side of the first switch. As a result, a position command is input to the vector control unit 50.

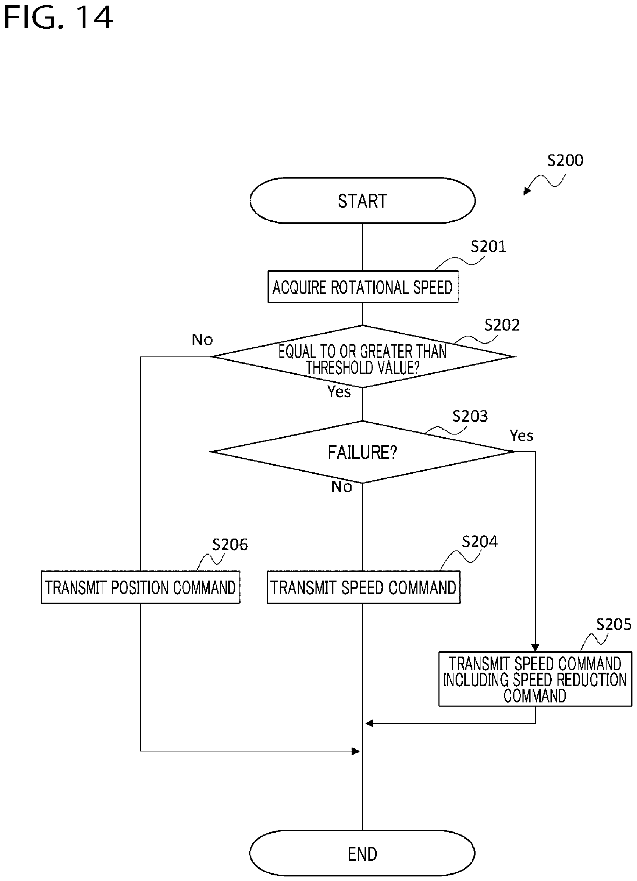

FIG. 14 is a flowchart illustrating a process S200 of the higher-level control apparatus 100 of the second embodiment. Since steps S201, S202, S204, and S206 in FIG. 14 are the same as steps S101-S104 in FIG. 4, a description thereof may be omitted.

When the rotational speed is equal to or greater than the threshold value in step S202 (Y in step S202), the process S200 proceeds to step S203. When the rotational speed is not equal to or greater than the threshold value (N in step S202), the process S200 proceeds to step S206.

In step S203, the determination unit 102 determines whether the rotary blade 30 has failed. The failure of the rotary blade 30 in this case is, for example, a defect in the electric motor 31, a damage to the blade 35, or a foreign matter such as dust clogging the rotating shaft of the rotary blade 30. The determination unit 102 determines that the rotary blade 30 has failed based on a failure signal output from the motor control apparatus 32 when the motor control apparatus 32 detects a failure of the rotary blade 30. For example, the motor control apparatus 32 detects a failure of the rotary blade 30 when the difference between the speed command value in the speed command and the rotational speed detected by the rotation detection sensor 33 is greater than or equal to a predetermined difference. When the rotary blade 30 has not failed (N in step S203), the process S200 proceeds to step S204. When the rotary blade 30 has failed (Y in step S203), the process S200 proceeds to step S205.

In step S205, the control unit 103 transmits a speed command including a speed reduction command to the motor control apparatuses 32 of the faulty rotary blade 30 and the rotary blade 30 associated therewith. The speed reduction command of this embodiment includes a command to stop the rotation of the faulty rotary blade 30 and the rotary blade 30 associated therewith. The speed reduction command may not stop the rotation of the rotary blade 30. The speed reduction command may reduce the rotational speed of the faulty rotary blade 30 below the threshold value and control the rotational speed of the rotary blade 30 associated with the faulty rotary blade 30 to approach the rotational speed of the faulty rotary blade 30.

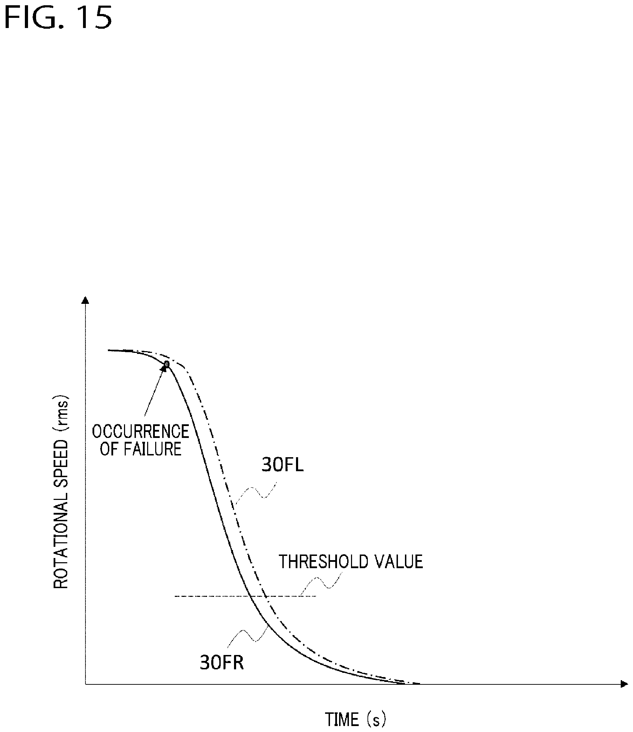

FIG. 15 illustrates the rotational speed of the rotary blade 30 in the event of a failure. In this example, it is assumed that each rotary blade 30 is driven at a rotational speed equal to or greater than the threshold value before the failure occurs. When a failure occurs in the first rotary blade 30FR, for example, the control unit 103 stops the rotation of the electric motor 31 provided in the first rotary blade 30FR to reduce the rotational speed of the first rotary blade 30FR and stops the rotation of the electric motor 31 provided in the second rotary blade 30FL associated with the first rotary blade 30FR to reduce the rotational speed of the second rotary blade FL. When the rotational speeds of the first rotary blade 30FR and the second rotary blade 30FL drop below the threshold value as a result, the control unit 103 transmits a position command to the motor control apparatuses 32 provided with the first rotary blade 30FR and the second rotary blade 30FL, respectively, to start controlling the rotational position of the first rotary blade 30FR and the second rotary blade 30FL. In this embodiment, the rotational positions of the first rotary blade 30FR and the second rotary blade 30FL are controlled to be in a positional relationship characterized by the same rotational position shown in FIG. 5. On the other hand, the other rotary blades 30MR, 30ML, 30RR, and 30RL that are not associated with the first rotary blade 30FR are subject to speed control in accordance with a user input from the user controller.

After steps S204-S206, the process S200 is terminated.

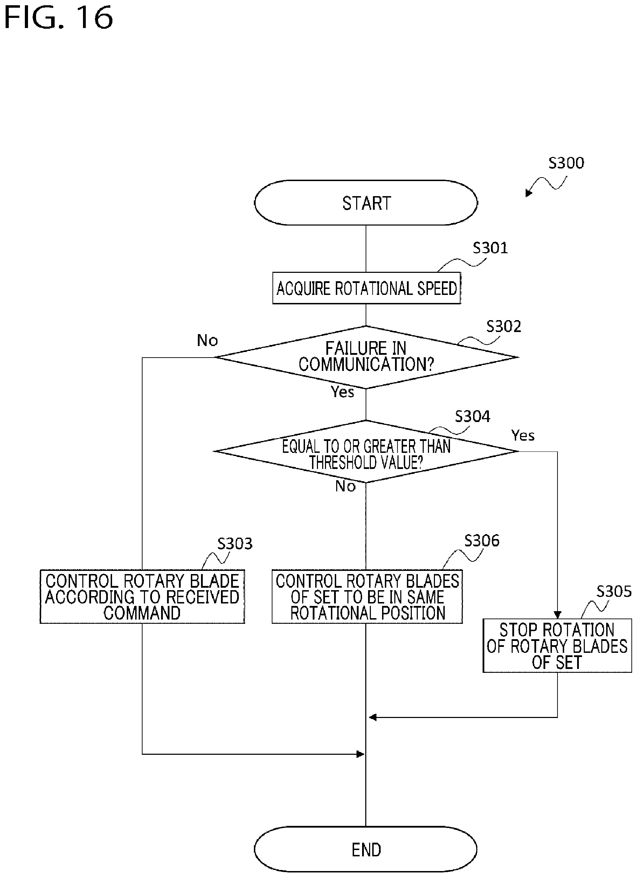

FIG. 16 is a flowchart illustrating a process S300 of the motor control apparatus 32 of the second embodiment. This process S300 is a process started at power-on of the eVTOL 1 and is repeatedly executed at predetermined time intervals (for example, every several milliseconds).

In step S301, the lower-level acquisition unit 201 acquires the rotational speed of the rotary blade 30.

For example, the lower-level acquisition unit 201 can acquire the rotational speed from the rotation detection sensor 33.

In step S302, the lower-level determination unit 202 determines whether there is an abnormality in communication between the control unit 103 of the higher-level control apparatus 100 and the motor control apparatus 32. For example, the lower-level determination unit 202 determines that there is an abnormality in communication when the signal reception intensity of the speed command or the position command from the higher-level control apparatus 100 is less than or equal to a predetermined intensity. When there is an abnormality in communication (Y in step S302), the process S300 proceeds to step S304. When there is no abnormality in communication (N in step S302), the process S300 proceeds to step S303.

In step S303, the lower-level control unit 203 controls the rotary blade 30 in response to the received speed command or position command.

In step S304, the lower-level determination unit 202 determines whether the acquired rotational speed is equal to or greater than the threshold value. When the rotational speed is equal to or greater than the threshold value (Y in step S304), the process S300 proceeds to step S305. When the rotational speed is not equal to or greater than the threshold value (N in step S304), the process S300 proceeds to step S306.

In step S305, the lower-level control unit 203 stops the rotation of rotary blade 30 provided with the motor control apparatus 32 determined to have an abnormality in communication (hereinafter referred to as an abnormal communication rotary blade 30) and the rotary blade 30 associated with the abnormal communication rotary blade 30 (hereinafter referred to as the associated rotary blade 30). For example, the lower-level control unit 203 stops the rotation of the abnormal communication rotary blade 30 by throwing the third switch SW3 to the side of the second terminal to input the value of 0 to the vector control unit 50. The lower-level control unit 203 also transmits a command to the motor control apparatus 32 provided in the associated rotary blade 30 to thrown the third switch SW3 to the side of the second terminal.

In step S306, the lower-level control unit 203 controls the abnormal communication rotary blade 30 and the associated rotary blade 30 to be in the same rotational position. For example, the lower-level control unit 203 throws the first switch SW1 and the second switch SW2 to the side of the second terminal side to input the rotational position of the associated rotary blade 30 to the vector control unit 50, thereby stopping the abnormal communication rotary blade 30 and the associated rotary blade 30 at the same rotational position. In the motor control apparatus 32 of the associated rotary blade 30, the first switch SW1 is thrown to the side of the second terminal and the second switch SW2 is thrown to the side of the first terminal so that the rotational position of the associated rotary blade 30 is controlled based on the position command.

After steps S304-S306, the process S300 is terminated.

When the first rotary blade 30FR fails, for example, it will be difficult to maintain balance during flight and the eVTOL 1 may not fly stably in the case the rotational position of the faulty first rotary blade 30FR and that of the second rotary blade 30FL associated therewith are different (see, for example, FIG. 5). In this embodiment, the control unit 103 controls, when it is determined that the rotary blade has failed, the rotational positions of the faulty rotary blade 30 and the rotary blade 30 associated therewith. According to this configuration, the appearance of the eVTOL 1 during flight can be improved and it is easy for the eVTOL 1 to fly stably even if a failure occurs, by setting the rotational positions of the faulty rotary blade 30 and the rotary blade 30 associated therewith in a predetermined position relationship. In particular, the configuration makes it easy for the eVTOL 1 to fly more stably by configuring the predetermined positional relationship between the rotary blades 30 of the same set to be the same rotational positions in a top view.

In this embodiment, when it is determined that the rotary blade 30 has failed, the control unit 103 reduces the rotational speed of the faulty rotary blade 30, controls the rotary blade 30 associated with the faulty rotary blade 30 to cause the rotational speed of the rotary blade 30 to approach the rotational speed of the faulty rotary blade 30, and controls the rotational position of the rotary blade 30 when the rotational speed of the rotary blade 30 is less than the threshold value. According to this configuration, it is easy to rotate the rotary blade 30 smoothly by controlling the rotational position in a state in which the rotational speed is low when, in the event of a failure in, for example, the first rotary blade 30, the rotational speed of the faulty first rotary blade 30FR is reduced and also the rotational speed of the second rotary blade 30FL associated therewith is reduced in order to achieve balance. Therefore, the appearance is not impaired so easily.

In the second embodiment, when the lower-level control unit 203 determines that there is a communication abnormality, the lower-level control unit 203 sets the rotational position of the abnormal communication rotary blade 30 and the rotational position of the associated rotary blade 30 in a predetermined positional relationship regardless of a command from the higher-level control apparatus 100. According to this configuration, it is easy for the eVTOL 1 to fly stably without a speed command or a position command from the higher-level control apparatus 100 even if an abnormality occurs in communication with the higher-level control apparatus 100.

In the second embodiment, the lower-level determination unit 202 of the motor control apparatus 32 determines a failure of the rotary blade 30, but the embodiment is not limited thereto. For example, the higher-level control apparatus 100 may determine a failure of the rotary blade 30.

In the second embodiment, either step S305 or S306 is executed according to a determination as to whether the rotational speed in step S304 is equal to or greater than the threshold value, but the embodiment is not limited thereto. For example, when it is determined that there is a communication abnormality in step S302 (Y in step S302), the process of step S305 may be executed, or the process of step S306 may be executed regardless of whether the rotational speed is equal to or greater than the threshold value (that is, by omitting step S304). Alternatively, the rotary blades in the set may be stopped after controlling their positions to be set in the predetermined positional relationship.

Examples of embodiments of the present invention are described above in detail. The embodiments described above are merely specific examples of practicing the present invention. The details of the embodiment shall not be construed as limiting the technical scope of the present invention. A number of design modifications such as modification, addition, deletion, etc. of constituting elements may be made to the extent that they do not depart from the idea of the invention defined by the claims. Although the details subject to such design modification are emphasized in the embodiment described above by using phrases such as "of this embodiment" and "in this embodiment", details not referred to as such are also subject to design modification.

Any combination of the embodiment and the variation described above will also be useful as an embodiment of the present invention. New embodiments created by the combination provide the advantages of embodiment and the variation combined.

## Claims

1. A motor control apparatus (32) provided in each of a plurality of rotary blades (30) of a flight vehicle (1), the flight vehicle (1) including: a main body (10); the plurality of rotary blades (30) that include a first rotary blade provided on one side of the main body (10) in a width direction and a second rotary blade provided on the other side of the main body (10) in the width direction; and a higher-level control apparatus that controls the plurality of rotary blades (30),
the motor control apparatus (32) comprising:
a lower-level control unit (203) that controls the rotary blades (30) based on a command transmitted from the higher-level control apparatus; and
a lower-level determination unit (202) that determines whether there is an abnormality in communication between the higher-level control apparatus and the motor control apparatus (32),
wherein the lower-level control unit (203) sets, when there is an abnormality in communication, the rotational position of the first rotary blade provided with the motor control apparatus (32) having an abnormality in communication and the rotational position of the second rotary blade associated with the first rotary blade in a predetermined positional relationship regardless of the command from the higher-level control apparatus.

2. A method used in a motor control apparatus (32) provided in each of a plurality of rotary blades (30) of a flight vehicle (1), the flight vehicle (1) including: a main body (10); the plurality of rotary blades (30) that include a first rotary blade provided on one side of the main body (10) in a width direction and a second rotary blade provided on the other side of the main body (10) in the width direction; and a higher-level control apparatus that controls the plurality of rotary blades (30),
the method comprising:
controlling the rotary blades (30) based on a command transmitted from the higher-level control apparatus;
determining whether there is an abnormality in communication between the higher-level control apparatus and the motor control apparatus (32); and
when there is an abnormality in communication, setting the rotational position of the first rotary blade provided with the motor control apparatus (32) having an abnormality in communication and the rotational position of the second rotary blade associated with the first rotary blade in a predetermined positional relationship regardless of the command from the higher-level control apparatus.

3. A program used in a motor control apparatus (32) provided in each of a plurality of rotary blades (30) of a flight vehicle (1), the flight vehicle (1) including: a main body (10); the plurality of rotary blades (30) that include a first rotary blade provided on one side of the main body (10) in a width direction and a second rotary blade provided on the other side of the main body (10) in the width direction; and a higher-level control apparatus that controls the plurality of rotary blades (30),
the program causing a computer to execute:
controlling the rotary blades (30) based on a command transmitted from the higher-level control apparatus;
determining whether there is an abnormality in communication between the higher-level control apparatus and the motor control apparatus (32); and
setting, when there is an abnormality in communication, the rotational position of the first rotary blade provided with the motor control apparatus (32) having an abnormality in communication and the rotational position of the second rotary blade associated with the first rotary blade in a predetermined positional relationship regardless of the command from the higher-level control apparatus.
